# EUROPÄISCHE PATENTSCHRIFT

(11) **EP 0 667 478 B1**
(45) Veröffentlichungstag und Bekanntmachung des Hinweises auf die Patenterteilung: **28.10.1998**
(21) Anmeldenummer: 95101469.5
(22) Anmeldetag: 03.02.1995
(51) Int. Cl.: F16L 25/00

(54) **Luftkanal für Luftleitungen einer Heizungs- und Belüftungs- bzw. einer Klimaanlage eines Kraftfahrzeugs**
Air duct for heating and ventilation or air-conditioning systems in a motor vehicle
Conduits d'air pour système de chauffage et de ventilation ou de conditionnement d'air dans une voiture automobile

(30) Priorität: 12.02.1994 DE 4404520
(43) Veröffentlichungstag der Anmeldung: 16.08.1995
(73) Patentinhaber: ADAM OPEL AG, 65423 Rüsselsheim (DE)
(72) Erfinder: Harzendorf, Andi, Dipl.-Ing., D-64293 Darmstadt (DE); Knobloch, Udo, D-55239 Gau-Odernheim (DE); Springer, Peter, Dipl.-Ing. (FH), D-65462 Gustavsburg (DE); Detampel, Heinz, D-65428 Rüsselsheim (DE)
(74) Vertreter: Bergerin, Ralf, Dipl.-Ing.

(56) Entgegenhaltungen:
- WO-A-89/01109
- US-A- 5 052 721

## Beschreibung

Die Erfindung bezieht sich auf einen Luftkanal für Heizungs- und Belüftungs- bzw. Klimaanlagen von Kraftfahrzeugen, der aus zwei Luftleitungen und einer Muffe besteht, die im Kraftfahrzeug zu montieren sind.

Das gesamte Luftleitungssystem im Kraftfahrzeug besteht aus einer Vielzahl einzelner Kanäle und Leitungen, durch die aufbereitete und temperierte Luft an den Bestimmungsort im Kraftfahrzeug zu fördern ist. Einige dieser Luftleitungen bestehen aus mehreren einzelnen Teilen, die im Kraftfahrzeug zu montieren und dann miteinander zu verbinden sind. Die Luftleitungen werden derart montiert, daß ihre Enden aufeinander zuweisen, aber voneinander beabstandet sind, wobei die beiden Luftleitungen annähernd fluchtend zueinander gehaltert werden. Der Abstand der beiden Leitungsenden voneinander ergibt sich aufgrund von Fertigungs- und Montagetoleranzen, unter Umständen aber auch aus montagetechnischen Gründen.

Aus der Praxis ist es bekannt, daß zur Überbrückung des Abstandes der beiden Leitungsenden voneinander Muffen zur Anwendung kommen. Um Abstandstoleranzen ausgleichen zu können, sind diese Muffen nach Art eines Faltenbalges ausgebildet, also in ihrer axialen Länge begrenzt variabel. Die Montage dieser Muffen ist recht aufwendig, da die Luftleitungen oftmals an sehr unzugänglichen Orten im Kraftfahrzeug montiert sind. Die Muffen müssen zusammen gedrückt werden, so daß sie zwischen die Leitungsenden passen und anschließend auf beide Leitungsenden aufgeschoben werden. Dafür ist viel Geschick erforderlich.

Beispielsweise in der DE-OS 35 23 079, der WO 89/01109 oder EP-OS 0 225 448 dokumentierte Rohrverbindungen können im vorliegenden Fall keine Anwendung finden, da die Leitungsenden dort ineinandergreifen müssen, was - wie weiter oben beschrieben - montagetechnisch nicht möglich ist. Diese Lösungen zeichnen sich auch durch einen relativ komplizierten, detailbehafteten Aufbau aus.

Aufgabe der vorliegenden Erfindung ist es, einen kostengünstig herstellbaren Luftkanal mit in axial variablem Abstand voneinander fest angeordneten Rohrleitungen und einer Muffe zu schaffen, der mit geringem Aufwand montierbar ist und im montierten Zustand eine ausreichende Dichtheit zwischen den Leitungsenden dauerhaft gewährleistet.

Zur Lösung dieser Aufgabe zeichnet sich der Luftkanal durch die im kennzeichnenden Teil des Patentanspruchs 1 angegebenen Merkmale aus. Weitere Gestaltungsmerkmale ergeben sich aus den Patentansprüchen 2 bis 7.

Zwischen den beiden, fest im Kraftfahrzeug gehalterten, axial etwa ausgerichteten, also fluchtenden Luftleitungen, die mit ihren Leitungsenden aufeinander zuweisen, besteht ein Abstand, dessen Maß von Toleranzen abhängig ist. Auf bzw. in einem Leitungsende ist erfindungsgemäß eine Schiebemuffe angeordnet, die schon bei der Montage dieser Leitung auf bzw. in dem Luftleitungsende sitzt. Die Schiebemuffe ist zwischen zwei Endpositionen relativ zu dem Leitungsende axial verschiebbar. Eine Endposition nimmt die Schiebemuffe bei der Montage der sie tragenden Luftleitung ein. In dieser Endposition ist die Schiebemuffe nahezu vollständig oder vollständig auf bzw. in das Leitungsende geschoben, so daß die Luftleitung ein kurzes Montagemaß aufweist. Die zweite Endposition nimmt die Schiebemuffe ein, wenn sie so weit wie möglich von dem Leitungsende abgezogen wurde, ohne von diesem abzufallen. In dieser Endposition weist die Luftleitung mit der ausgezogenen Schiebemuffe ihre maximal mögliche Länge auf. Beide Endpositionen der Schiebemuffe werden definiert von elastisch radial verformbaren Verrastungen zwischen der Schiebemuffe und der Luftleitung. Eine Verrastung verhindert das zu weite Auf- bzw. Einschieben der Schiebemuffe auf bzw. in die Luftleitung, die zweite Verrastung verhindert, daß die Schiebemuffe von der Luftleitung abgezogen werden kann.

Die Schiebemuffe kann gemeinsam mit der sie tragenden Luftleitung angeliefert werden, ohne daß eine Gefahr besteht, daß sie verlorengeht. Sie wird gemeinsam mit der Luftleitung im Kraftfahrzeug montiert, ist dann - anders als der eingangs beschriebene Faltenbalg - bereits in der Montageausgangsposition. Die zweite Luftleitung kann montiert werden und anschließend ist die Schiebemuffe axial in Richtung des zweiten Leitungsendes zu verschieben, bis sie dort zur dichtenden Anlage kommt. Der mögliche Verschiebeweg ist variabel. Er ergibt sich aus dem toleranzbehafteten Abstand der beiden Leitungsenden voneinander.

Zwischen den die Endpositionen der Schiebemuffe definierenden Verrastungen ist zumindest eine weitere radial elastische Verrastung vorgesehen. Diese Verrastungen ermöglichen, daß Zwischenpositionen der Schiebemuffe auf dem Leitungsende einstellbar sind. Im Regelfall wird die Schiebemuffe in einer solchen Zwischenposition den Abstand zwischen den Leitungsenden vollständig überbrücken.

Die Verrastungen sind am Umfang der Schiebemuffe und des (die Schiebemuffe tragenden) Leitungsendes innerhalb von Verrastungszonen angeordnet, wobei die Verrastungszonen der Schiebemuffe und des Leitungsendes eine etwa komplementäre Form aufweisen. Die Verrastungszonen sind in etwa axial ausgerichtet, nach dem Feder-Nut-Prinzip gestaltet und gestatten damit ausschließlich das axiale Verschieben, nicht aber das Verdrehen der Schiebemuffe auf dem Leitungsende. Dies kann auch dadurch gewährleistet sein, daß die Luftleitungen und die Schiebemuffe eine ovale oder kantige Querschnittsfläche aufweisen.

In der weiteren Ausbildung der Erfindung hat es sich als besonders vorteilhaft erwiesen, eine gerade Anzahl von Verrastungszonen vorzusehen. Es sind immer zwei diametral gegenüberliegende Verrastungszonen gleich gestaltet. Verrastungen dieser Verrastungszonen kommen beim axialen Verschieben der Schiebemuffe immer annähernd gleichzeitig zum Eingriff. Verrastungen benachbarter Verrastungszonen sind dagegen so positioniert, daß sie axial versetzt eingreifen, also normalerweise nicht gleichzeitig mit ihren benachbarten Verrastungen die Schiebemuffe auf dem Leitungsende axial fixieren.

Die Verrastungen selbst können keil- oder wulstförmig ausgebildet sein, wobei es von Vorteil ist, wenn die Form dieser Ausnehmungen bzw. Ausbuchtungen unsymmetrisch bezüglich einer radialen Schnittebene durch die Schiebemuffe und das Leitungsende sind. Befinden sich Verrastungen im Eingriff, sind zur Bewegung der Schiebemuffe axiale Kräfte erforderlich, deren Größe sich aus Reib- und Federkräften ergibt, die der Bewegung entgegenwirken. Bei unsymmetrischer Gestaltung der Ausnehmungen/Ausbuchtungen sind unterschiedliche Kräfte erforderlich, um die Schiebemuffe von dem Leitungsende abzuziehen bzw. um sie wieder in Richtung des Leitungsendes zu schieben. Ein Abziehen soll relativ leicht manuell möglich sein. Das Zurückschieben soll andererseits nur mit erhöhtem Kraftaufwand und auf keinen Fall selbsttätig möglich sein. Dies wird durch das o. g. Gestaltungsmerkmal erreicht, wenn unsymmetrische, verschiedene Keilwinkel vorliegen.

Zwischen dem freien Ende der zweiten Luftleitung und der Schiebemuffe ist eine elastische Dichtung vorzusehen. Diese Dichtung wird in der Montageendposition axial gegen einen die Luftleitung umgebenden Anschlag gepreßt und dabei elastisch so weit verformt, bis eine Verrastung zwischen der Schiebemuffe und dem ersten Leitungsende einschnappt.

Die Montage der Luftleitungen kann nun denkbar einfach erfolgen. Die beiden Luftleitungen werden auf herkömmliche Weise montiert, wobei sich die Schiebemuffe bereits im Anlieferungszustand auf/in dem Ende einer Luftleitung befindet. Nach der Leitungsmontage wird die Schiebemuffe nur noch axial in Richtung des zweiten Leitungsendes verschoben, bis sie dort dicht anliegt und auf/in dem ersten Leitungsende verrastet ist. Somit wurde eine Schnellkupplung für Rohrleitungen geschaffen, die einfach im Aufbau und in der Montage ist und eine Überbrückung des toleranzbehafteten Abstandes zwischen den beiden zueinander weisenden Enden der Rohrleitungen gestattet.

Die Erfindung wird im folgenden anhand eines Ausführungsbeispiels näher beschrieben. In den dazugehörigen Zeichnungen zeigt:
- Fig. 1:: Seitenansicht auf erfindungsgemäß miteinander verbundene Luftleitungen;
- Fig. 2:: Schnitt II-II aus Figur 1;
- Fig. 3:: Schnitt III-III aus Figur 2;
- Fig. 4:: Schnitt IV-IV aus Figur 2;
- Fig. 5:: Schnitt (Schnittebene III-III) durch die mit der Schiebemuffe verbundene Luftleitung bei in der aufgeschobenen Endposition befindlicher Schiebemuffe;
- Fig. 6:: Schnitt (Schnittebene IV-IV) durch die mit der Schiebemuffe verbundene Luftleitung nach Figur 5;
- Fig. 7:: Schnitt (Schnittebene III-III) durch die mit der Schiebemuffe verbundene Luftleitung bei in der abgezogenen Endposition befindlicher Schiebemuffe;
- Fig. 8:: Schnitt (Schnittebene IV-IV) durch die mit der Schiebemuffe verbundene Luftleitung nach Figur 7.

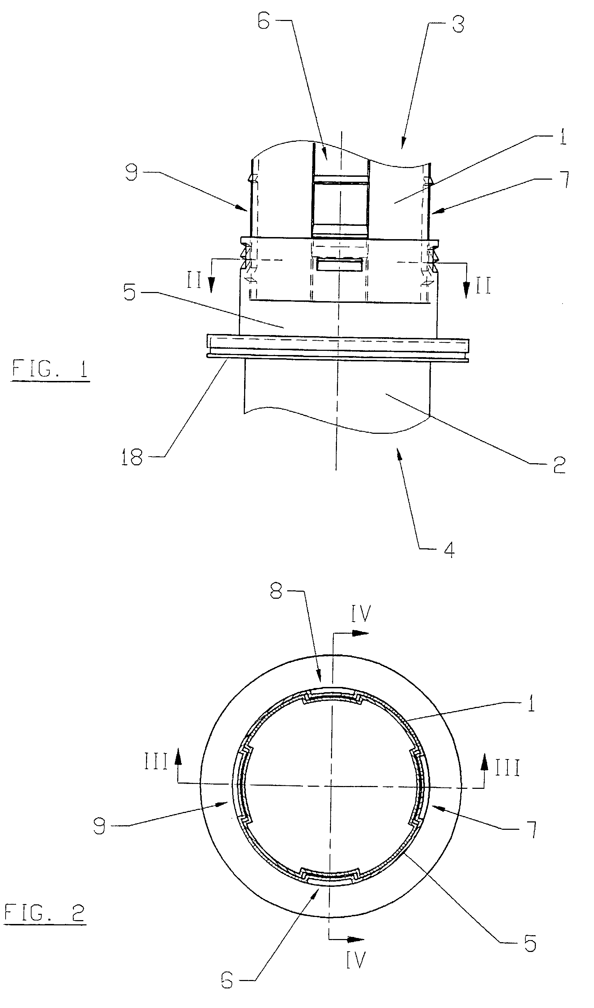

In Figur 1 sind zwei Rohrleitungen, insbesondere Luftleitungen 1, 2 gezeigt, die Bestandteil einer Heizungs- und Belüftungsanlage eines Kraftfahrzeugs sind. Speziell handelt es sich bei der Luftleitung 1 um ein nur abschnittsweise dargestelltes Anschlußstück 3 und bei der Luftleitung 2 um eine Luftführung 4 zum Fußraum der hinten im Kraftfahrzeug sitzenden Fahrzeugpassagiere. Die Enden der Luftleitungen 1, 2 weisen aufeinander zu, sind voneinander beabstandet, und die Luftleitungen 1, 2 sind annähernd koaxial zueinander ausgerichtet. Wie die Figur 2 zeigt, haben die Luftleitungen 1, 2 und eine Schiebemuffe 5 eine im allgemeinen kreisringförmige Querschnittsfläche. Sie könnten aber auch oval oder als Vierkantrohr ausgebildet sein.

An den Umfangsflächen der Luftleitung 1 und der Schiebemuffe 5 sind Verrastungszonen 6 - 9 vorgesehen. Diametral gegenüberliegende Verrastungszonen 6, 8; 7, 9 sind jeweils gleich ausgebildet. Auch hier sind Variationen möglich. Beispielsweise könnten auch sechs oder acht Verrastungszonen vorgesehen werden. Die Verrastungszonen 6 - 9 sind nach dem Nut-Feder-Prinzip ausgebildet. So wird gewährleistet, daß die Schiebemuffe 5 ausschließlich auf dem Ende der Luftleitung 1 axial verschiebbar, nicht jedoch verdrehbar ist. Da die Breite der Verrastungszonen 6, 8 anders ist, als die der Verrastungszonen 7, 9, kann die Schiebemuffe 5 nur in einer Stellung auf die Luftleitung geschoben werden. In einer um 90° verdrehten Position paßt die Schiebemuffe 5 nicht auf die Luftleitung 1.

Innerhalb der Verrastungszonen 6 - 9 ist die Luftleitung 1 mit Ausnehmungen 10 - 14 versehen, die im Zusammenspiel mit Ausbuchtungen 15, 16 innerhalb der Verrastungszonen 6 - 9 der Schiebemuffe 5 Verrastungen bilden. Alle Ausnehmungen 10 - 14 der Luftleitung 1 haben eine radial nach außen weisende Keilform. Sie sind jedoch unsymmetrisch bezüglich einer Radialebene durch die jeweilige Keilspitze ausgebildet. Die sich jeweils diametral gegenüberliegenden Ausnehmungen 10 und die dazu benachbarten Ausnehmungen 12 liegen in der gleichen Radialebene. Die übrigen Ausnehmungen 11, 13, 14 sind in zum Leitungsende hin versetzten Ebenen angeordnet.

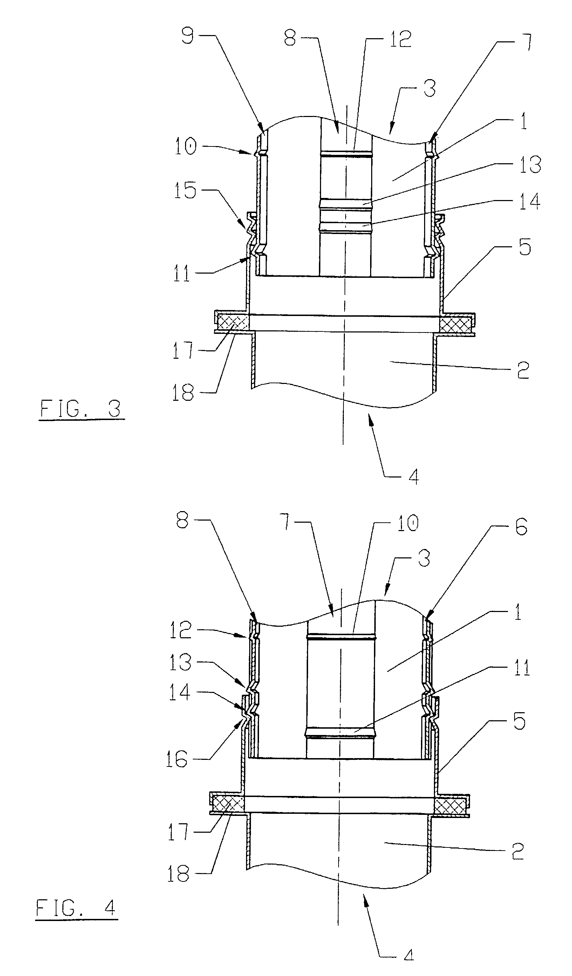

Die nach innen weisenden Ausbuchtungen 15, 16 innerhalb der Verrastungszonen 6 - 9 der Schiebemuffe 5 sind ebenfalls keilförmig und ebenfalls unsymmetrisch bezüglich einer Radialebene ausgebildet. Die gegenüberliegenden Ausbuchtungen 15 wirken mit den Ausnehmungen 10, 11 der Luftleitung 1 zusammen. Die benachbarten Ausbuchtungen 16 wirken in Zusammenhang mit den Ausnehmungen 12, 13, 14. Die genaue Wirkungsweise ist durch die Figuren 3 bis 8 verdeutlicht:

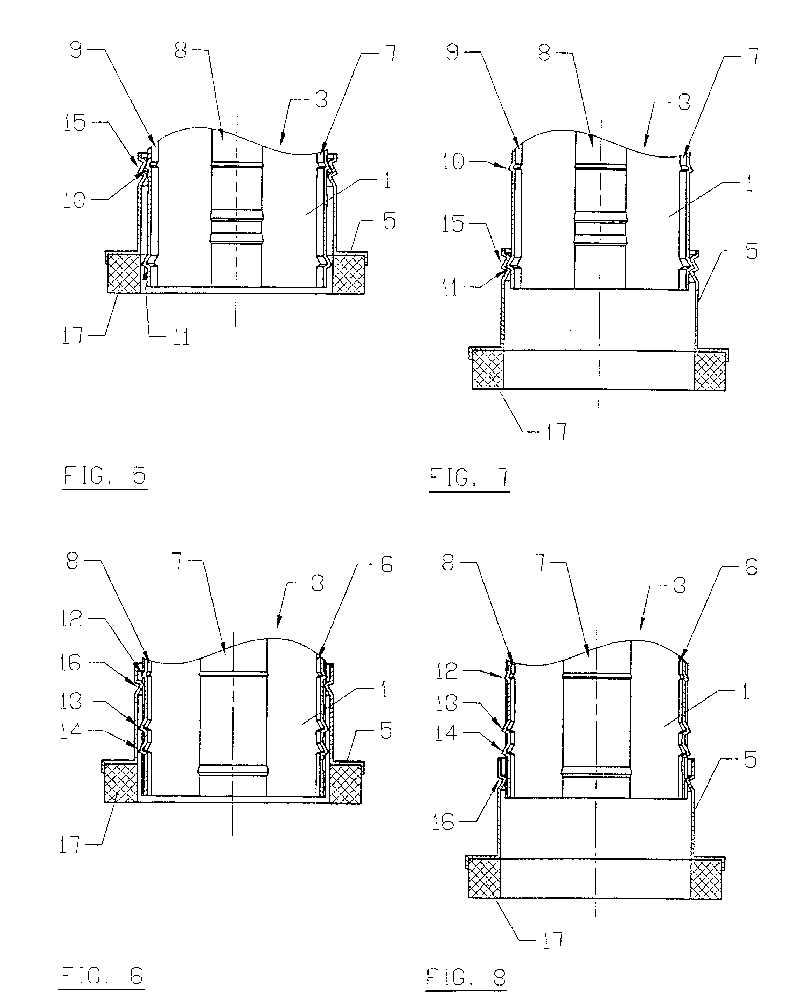

Zur Definition zweier Endpositionen der Schiebemuffe 5 auf dem Leitungsende der Luftleitung 1 sind die Ausnehmungen 10, 11, 12 an der Luftleitung 1 vorgesehen, wobei die Ausnehmungen 10 und 11 ausschließlich in den Verrastungszonen 7 und 9 und die Ausnehmungen 12 nur in den Verrastungszonen 6 und 8 angeordnet sind. Im Anlieferungszustand (Figur 5 und 6) befindet sich die Schiebemuffe 5 im voll auf die Luftleitung 1 aufgeschobenen Zustand. Dabei ist die Schiebemuffe 5 in einer Endposition verrastet. Die Ausnehmungen 10 sitzen in den Ausbuchtungen 15. Die Schiebemuffe 5 ist nicht frei auf der Luftleitung 1 beweglich, da die Ausbuchtungen 15 eine Doppelkeilform aufweisen. Zusätzlich liegen die Ausbuchtungen 16 unterhalb der Ausnehmungen 12. Aufgrund der Keilwinkel ist ein begrenztes Abziehen der Schiebemuffe 5 von der Luftleitung 1 mit relativ geringer manueller Kraft in axialer Richtung möglich. Nach Überwindung von Reib- und Federkräften können sich die Ausnehmungen 10 aus den Ausbuchtungen 15 herausbewegen. Das weitere Aufschieben der Schiebemuffe 5 auf die Luftleitung ist sicher verhindert, da steilere Keilwinkel zu überwinden sind und zusätzlich die Ausnehmungen 12 an den Ausbuchtungen 16 anliegen.

Die zweite Endstellung der Schiebemuffe 5 ist durch die Verrastung der Ausnehmungen 11 innerhalb der Ausbuchtungen 15 definiert (Figur 7 und 8). Hier befindet sich die Schiebemuffe 5 in einer maximal abgezogenen Position. Nach der Verrastung ist die Schiebemuffe 5 axial nicht mehr frei beweglich. In dieser Endposition sitzen die Ausbuchtungen 16 der Schiebemuffe 5 frei unterhalb der Ausnehmungen 14 der Luftleitung 1.

Durch die Ausnehmungen 13 und 14 sind in Zusammenwirkung mit der Ausbuchtung 16 Zwischenpositionen der Schiebemuffe 5 einstellbar. Eine dieser Zwischenpositionen ist in den Figuren 1 bis 4 verdeutlicht. Wird die Schiebemuffe 5 aus der obersten Endstellung (Figur 5 und 6) nach unten verschoben, kommen die Ausbuchtungen 16 von oben zur Anlage an die Ausnehmungen 13, was nur innerhalb der Verrastungszonen 6 und 8 der Fall ist. Durch Überwindung von Reibkräften und etwa radial wirkenden Federkräften können die Ausbuchtungen 16 an den Ausnehmungen 13 vorbei und dann ohne großen Kraftaufwand weiter nach unten bewegt werden, bis sie an den Ausnehmungen 14 anliegen. Durch axial an der Schiebemuffe 5 wirkende (manuell aufzubringende) Kräfte sind die Ausbuchtungen 16 auch an den Ausnehmungen 14 vorbeibewegbar. Bewegungen der Schiebemuffe 5 in entgegengesetzter Richtung (also in Richtung der Luftleitung 1) sind nur bei Einwirkung deutlich größerer Kräfte möglich, da hier sehr steile Keilwinkel zu überwinden sind. In den Zwischenpositionen (Ausbuchtungen 16 unterhalb der Ausnehmungen 13 oder 14) ist die Schiebemuffe 5 also nur noch in einer Richtung frei beweglich. Das Abziehen der Schiebemuffe 5 von der Luftleitung 1 kann insgesamt sehr leicht erfolgen, während das Zurückschieben manuell kaum möglich ist.

Die Schiebemuffe 5 ist an ihrem der Luftleitung 2 zugewandten Ende flanschartig ausgebildet und dort mit einer Dichtung 17 versehen. Die Dichtung 17 ist an der Schiebemuffe 5 verklemmt oder verklebt. Sie besteht aus elastisch komprimierbarem Material. Das Ende der Luftleitung 2 besteht aus einer flanschartigen Druckplatte 18. Wird die Schiebemuffe 5 nach der Montage der Luftleitungen 1, 2 im Kraftfahrzeug in Richtung der Druckplatte 18 bewegt, kommt die Dichtung 17 dort nach einem gewissen Verschiebeweg zur dichtenden Anlage. Der notwendige Verschiebeweg ist abhängig von den bereits weiter oben genannten Montagetoleranzen. Die Schiebemuffe 5 wird so weit in Richtung der Druckplatte 18 bewegt, wie dies manuell möglich ist. Dabei wird die Dichtung 17 elastisch verformt. Wird die Schiebemuffe 5 jetzt losgelassen, federt sie zurück, bis die Ausbuchtungen 16 an den Ausnehmungen 13 oder 14 anliegen. Ist der Abstand zwischen den Luftleitungen 1 und 2 groß, kann es auch möglich sein, daß die Montageendposition der Schiebemuffe 5 mit ihrer unteren Endposition (Figur 7 und 8) zusammenfällt. Im Normalfall wird die Montageendposition der Schiebemuffe 5 aber von einer der beiden Zwischenpositionen gebildet, wie dies in den Figuren 1 bis 4 gezeigt ist.

Der axiale Abstand der Ausnehmungen 13, 14 und 11 voneinander ist so bemessen und auf die Elastizität der Dichtung 17 abgestimmt, daß die Ausbuchtungen 16 immer mit einer gewissen Kraft an den Ausnehmungen 13 oder 14 anliegen bzw. die Ausnehmungen 11 in den Ausbuchtungen 15 verrastet sind. Die in der Dichtung 17 gespeicherte Kraft sorgt für eine ständig sichere und nicht klappernde Verbindung zwischen den Luftleitungen 1, 2.

Durch die Erfindung ergeben sich bedeutende Erleichterungen bei der Luftleitungsmontage. Die Luftleitung 1 wird gemeinsam mit der Schiebemuffe 5 angeliefert, befindet sich also gleich nach der Leitungsmontage in einer genau definierten Ausgangsposition. Die Schiebemuffe 5 muß dann nur noch in Richtung der zweiten Luftleitung 2 verschoben werden und verrastet unabhängig von Toleranzen in einer dichtenden Position.

## Patentansprüche

1. Luftkanal für eine Heizungs- und Belüftungs- bzw. Klimaanlage eines Kraftfahrzeugs, bestehend aus zwei fest, annähernd fluchtend zueinander mit beabstandeten Enden im Kraftfahrzeug angeordneten Luftleitungen (1, 2) und aus einer diese Luftleitungen verbindenden Muffe, **dadurch gekennzeichnet,** daß die Muffe eine auf bzw. in einem Ende einer der Luftleitungen (1) angeordnete, axial verschiebbare und in verschiedenen axialen Positionen auf bzw. in der Luftleitung (1) verrastbare rohrförmige Schiebemuffe (5) ist, wobei zwei Endpositionen der Schiebemuffe (5) definierende Verrastungen und weitere, zumindest eine Zwischenposition definierende Verrastungen vorgesehen sind und die Schiebemuffe (5) in einer axialen, verrasteten Position den Abstand zwischen den beiden Leitungsenden vollständig überbrückt.

2. Luftkanal nach Anspruch 1, **dadurch gekennzeichnet,** daß eine gerade Anzahl, insbesondere vier Verrastungszonen (6 - 9) am Umfang des Endes der Luftleitung (1) und am Umfang der Schiebemuffe (5) diametral gegenüberliegend angeordnet sind und die Verrastungen der diametral gegenüberliegenden Verrastungszonen (6, 8; 7, 9) beim axialen Verschieben der Schiebemuffe (5) auf dem Leitungsende annähernd gleichzeitig verrasten.

3. Luftkanal nach den Ansprüchen 1 und 2, **dadurch gekennzeichnet,** daß die Verrastungszonen (6 - 9) des Leitungsendes und der Schiebemuffe (5) eine etwa komplementäre Form aufweisen, der Gestalt, daß ein Verdrehen der Schiebemuffe (5) auf der Luftleitung (1) nicht möglich ist.

4. Luftkanal nach den Ansprüchen 1 bis 3, **dadurch gekennzeichnet,** daß die Verrastungen von in radialer Richtung keilförmigen oder wulstförmigen, zueinander etwa komplementären Ausnehmungen (10 - 14)/Ausbuchtungen (15, 16) innerhalb der Verrastungszonen (6 - 9) der Schiebemuffe (5) und des Leitungsendes gebildet werden, wobei in den Verrastungszonen (6 - 9) der Schiebemuffe (5) und/oder des Leitungsendes mehrere Ausnehmungen (10 - 14)/Ausbuchtungen (15, 16) axial hintereinander angeordnet sind.

5. Luftkanal nach Anspruch 4, **dadurch gekennzeichnet,** daß die keil- oder wulstförmigen Ausnehmungen (10-14)/Ausbuchtungen (15, 16) unsymmetrisch bezüglich einer radialen Schnittebene durch die Luftleitung (1) bzw. die Schiebemuffe (5) geformt sind.

6. Luftkanal nach den Ansprüchen 1 bis 5, **dadurch gekennzeichnet,** daß die Verrastungen der Schiebemuffe (5) und des Leitungsendes derart ausgebildet sind, daß freie Relativbewegungen der Schiebemuffe (5) auf/in dem Ende der Luftleitung (1) nur begrenzt in einer axialen Richtung oder gar nicht erfolgen können, wobei durch axial an der Schiebemuffe (5) angreifende Kräfte, Reib- und Federkräfte überwindbar sind und die Schiebemuffe (5) über die bzw. aus den Verrastungen bewegbar ist.

7. Luftkanal nach den Ansprüchen 1 bis 6, **dadurch gekennzeichnet**, daß eine Dichtung (17) zwischen der Schiebemuffe (5) und dem Ende der Luftleitung (2) vorgesehen ist, die entweder in/auf einem freien Ende der Schiebemuffe (5) oder auf/in dem Leitungs ende angeordnet und beim axialen Verschieben der Schiebemuffe (5) in Richtung des Endes der Luftleitung (2) elastisch verformbar ist.

## Claims

1. Air duct for a heating and ventilation or air conditioning system of a motor vehicle, consisting of two air pipes (1, 2) arranged stationarily and approximately in alignment with each other with spaced-apart ends in the motor vehicle and a sleeve connecting these air pipes, characterised in that the sleeve is a tubular sliding sleeve (5) which is arranged on or in one end of one of the air pipes (1) and which is axially slidable and latchable in different axial positions on or in the air pipe (1), wherein latch means defining two end positions of the sliding sleeve (5) and additional latch means defining at least one intermediate position are provided and the sliding sleeve (5) in one axial latched position completely bridges the distance between the two pipe ends.

2. Air duct according to claim 1, characterised in that an even number, in particular four latch zones (6-9) are arranged diametrically opposite at the circumference of the end of the air pipe (1) and at the circumference of the sliding sleeve (5), and the latch means of the diametrically opposed latch zones (6, 8; 7, 9) latch approximately simultaneously on axial sliding of the sliding sleeve (5) on the pipe end.

3. Air duct according to claims 1 and 2, characterised in that the latch zones (6-9) of the pipe end and of the sliding sleeve (5) have a roughly complementary shape such that rotation of the sliding sleeve (5) on the air pipe (1) is not possible.

4. Air duct according to claims 1 to 3, characterised in that the latch means are formed by recesses (10-14) /indentations (15, 16) which are wedge-shaped or bead-shaped in a radial direction and roughly complementary to each other within the latch zones (6-9) of the sliding sleeve (5) and of the pipe end, wherein several recesses (10-14) /indentations (15, 16) are arranged axially one behind the other in the latch zones (6-9) of the sliding sleeve (5) and/or of the pipe end.

5. Air duct according to claim 4, characterised in that the wedge-shaped or bead-shaped recesses (10-14) /indentations (15, 16) are shaped asymmetrically relative to a radial section plane through the air pipe (1) or the sliding sleeve (5).

6. Air duct according to claims 1 to 5, characterised in that the latch means of the sliding sleeve (5) and of the pipe end are constructed in such a way that free relative movements of the sliding sleeve (5) on/in the end of the air pipe (1) can take place only to a limited extent in an axial direction or not at all, wherein friction and spring forces can be overcome by forces applied axially to the sliding sleeve (5) and the sliding sleeve (5) can be moved over or out of the latch means.

7. Air duct according to claims 1 to 6, characterised in that a seal (17) is provided between the sliding sleeve (5) and the end of the air pipe (2), which is arranged either in/on a free end of the sliding sleeve (5) or on/in the pipe end and on axial sliding of the sliding sleeve (5) is elastically deformable in the direction of the end of the air pipe (2).

## Revendications

1. Canal d'air pour une installation de chauffage et de ventilation ou de climatisation d'un véhicule automobile, composé de deux conduits d'air (1, 2) disposés en position stationnaire, dans le véhicule automobile, leurs extrémités étant sensiblement alignées et espacées, et d'un manchon reliant ces conduits d'air entre eux, caractérisé par le fait que le manchon est un manchon coulissant (5) tubulaire disposé sur ou dans une extrémité d'un des conduits d'air (1) en étant déplaçable en translation axiale et verrouillable par encliquetage dans plusieurs positions axiales sur ou dans ledit conduit d'air (1), des encliquetages étant prévus pour définir deux positions extrêmes du manchon coulissant (5) et au moins une position intermédiaire, le manchon coulissant (5) comblant complètement la distance entre les deux extrémités des conduits dans une position axiale définie par encliquetage.

2. Canal d'air suivant la revendication 1, caractérisé par le fait qu'un nombre pair, en particulier quatre zones d'encliquetage (6 - 9) sont disposées dans des positions diamétralement opposées sur le pourtour de l'extrémité du conduit d'air (1) et sur le pourtour du manchon coulissant (5), les encliquetages des zones d'encliquetage (6, 8 ; 7, 9) diamétralement opposées produisant des encliquetages sensiblement simultanés lors du déplacement en translation axiale du manchon coulissant (5) sur l'extrémité du conduit.

3. Canal d'air suivant les revendications 1 et 2, caractérisé par le fait que les zones d'encliquetage (6-9) de l'extrémité du conduit et du manchon coulissant (5) présentent des formes à peu près complémentaires, de telle manière qu'un mouvement angulaire du manchon coulissant (5) sur le conduit d'air (1) ne soit pas possible.

4. Canal d'air suivant les revendications 1 à 3, caractérisé par le fait que les encliquetages sont constitués par des creux (10 - 14)/saillies (15, 16) sensiblement complémentaires, en forme de coins ou de bourrelets en direction radiale, dans les zones d'encliquetage (6 - 9) du manchon coulissant (5) et de l'extrémité de conduit, plusieurs creux (10 - 14)/saillies (15, 16) étant disposés axialement les uns derrière les autres dans les zones d'encliquetage (6 - 9) du manchon coulissant (5) et/ou de l'extrémité du conduit.

5. Canal d'air suivant la revendication 4, caractérisé par le fait que les creux (10 - 14)/saillies (15, 16) en forme de coins ou de bourrelets sont conformés de façon asymétrique par rapport à un plan de coupe radial du conduit d'air (1) ou du manchon coulissant (5).

6. Canal d'air suivant les revendications 1 à 5, caractérisé par le fait que les encliquetages du manchon coulissant (5) et de l'extrémité du conduit sont conformés de manière que des mouvements relatifs libres du manchon coulissant (5) sur/dans l'extrémité du conduit d'air (1) ne soient possibles que de façon limitée dans une direction axiale ou ne soient pas possibles du tout, des efforts devant être exercés axialement sur le manchon coulissant (5) pour surmonter des forces de frottement ou des forces de ressort et déplacer le manchon coulissant (5) pour lui faire franchir les encliquetages ou le dégager des encliquetages.

7. Canal d'air suivant les revendications 1 à 6, caractérisé par le fait qu'un joint (17) est prévu entre le manchon coulissant (5) et l'extrémité du conduit d'air (2), lequel joint est disposé soit dans/sur une extrémité libre du manchon coulissant (5) ou sur/dans l'extrémité du conduit et étant élastiquement déformable lors du déplacement en translation axial du manchon coulissant (5) en direction de l'extrémité du conduit d'air (2).
